# EUROPEAN PATENT SPECIFICATION

(11) **EP 0 492 016 B1**
(45) Date of publication and mention of the grant of the patent: **18.09.2002**
(21) Application number: 90314424.4
(22) Date of filing: 28.12.1990
(51) Int. Cl.: C09J 197/02, C08L 97/02

(54) **Thermosetting resin material and composite products from lignocellulose**
Wärmehärtbares Harz und Verbundstoff aus Lignozellulosematerial
Résine thermodurcissable et produit composite à partir de matière lignocellulosique

(43) Date of publication of application: 01.07.1992
(60) Divisional application: 95200811.8
(73) Proprietor: K.C. SHEN TECHNOLOGY INTERNATIONAL LTD., Ottawa, Ontario K1J 8K1 (CA)
(72) Inventor: Shen, Kuo Chen, Ottawa, Ontario K1J8KL (CA)
(74) Representative: Seaborn, George Stephen

(56) References cited:
- EP-A- 0 161 766
- EP-A- 0 346 559
- DE-B- 1 234 381
- US-A- 2 224 135
- US-A- 3 405 053

## Description

In the applicant's European Patent No. 161 766 there is disclosed a process for making composite products from lignocellulosic material. This process involves first decomposing and hydrolyzing hemicellulose into water solubles of low molecular weight carbohydrates by subjecting the lignocellulosic material to high pressure steam and then utilizing those water solubles as a thermosetting adhesive to bond "in situ" the other components of the lignocellulosic material into a reconstituted composite product under heat and pressure. The water solubles act as both a bonding and a bulking agent to produce a composite product with good mechanical strength and superb dimensional stability. Thus, the process is superior in both economical and technological aspects to the conventional method, which require thermosetting synthetic resin adhesive, such as phenol and urea formaldehyde, for bonding.

The present invention relates to a process for extracting a thermosetting resin adhesive from lignocellulosic material and converting the lignocellulosic material to a composite product. This process is applicable to all lignocellulosic material of woody or non-woody nature. The thermosetting adhesive thus obtained has good adhesive properties for bonding lignocellulosic and non-lignocellulosic material to produce a waterproof bond.

First the hemicellulose of lignocellulosic material is decomposed and hydrolyzed by high pressure steam to produce low molecular weight water soluble resin material selected from the group consisting of pentose and hexose sugars, sugar polymers, furfural, dehydrated carbohydrates, organic acids and other decomposition products. These water solubles can be extracted and concentrated to be used as a thermosetting resin adhesive. Under heat and pressure these water soluble resin materials can be polymerized, crosslinked and thermoset to produce a waterproof bond which is resistant to boiling water.

The lignocellulosic residue, from which the water solubles have been extracted, is again treated with high temperature steam for the second time to cause thermal decomposition and hydrolyzation of cellulose into low molecular weight water solubles selected from the group consisting of hexose and pentose sugars, sugar polymers, hydroxymethyl furfural, furfural, organic acids and other decomposition products. These water solubles can be extracted and concentrated to be used, alone or mixed with water solubles extracted from hemicellulose hydrolyzaton, as a thermosetting resin adhesive. Lignin also undergoes thermal decomposition and hydrolyzation during high pressure steam treatment to yield low molecular weight lignin and lignin products. Incidentally, water soluble resin material always contains a small portion of these lignin decomposition products.

In conventional methods for making composite products from lignocellulosic material thermosetting resin binders are required for bonding. The thermosetting resin binders are commonly synthesized from petrochemically based chemicals such as urea-formaldehyde and phenol-formaldehyde, which are the most common synthetic resins used in composite products from lignocellulosic material. Since these synthetic resin binders are derived from non-renewable petrochemicals they are becoming increasingly expensive as the natural sources are being depleted. The use of lignocellulosic material, which is renewable, as a feedstock for a thermosetting adhesive will therefore be highly attractive to manufacturers, since its use is technologically and economically superior to conventional methods.

The use of water soluble carbohydrates from the hemicellulose fraction of lignocellulosic material as adhesive first appeared in the 1930's after Mason patented his process, "Masonite" (US Patent Nos.1,578,609, 1,824,221 and 2,303,345), for making hardboard from wood chips. The Masonite process involves treating wood chips with high pressure steam to separate lignin out from the lignocellulosic material, to hydrolyze hemicellulose and to render it water soluble. At the end of steaming, the treated chips are discharged from the high pressure gun with an explosion which reduces chips into fibres and fibre bundles. The water solubles are eluted with water and separated out and the remaining fibres conataining cellulose and lignin are processed into hardboard. Masonite relies on the natural lignin for bonding.

The water solubles are processed separately as a by-product with a trade mark of "Masonoid." In U.S. Patent 2,224,135, issued to R. Boehm, "Masonoid", the water soluble by-product from hardboard manufacturing is used for making aldehydes, alcohols and organic acids. This patent also mentions that the water solubles thus obtained can be further concentrated and used as a water soluble adhesive. The use of "Masonoid" as a water soluble adhesive is also taught in US patents 2,643,953 and 2,716,613, issued to W. Schoel in 1949 and 1950 respectively. In these patents, it is stated that while these water solubles have adhesive properties, it has been found that they are not entirely satisfactory for use as an adhesive. One reason given is that these water solubles are undesirably hygrosocopic and therefore, the bond formed by them in adhesive application is somewhat unstable. Under high humidity the adhesive bond formed by these water solubles absorbs moisture from the air, thereby weakening the adhesive bond, whereas under low humidity, the adhesive bond formed by these water solubles loses moisture and weakens. Upon absorbing moisture, the adhesive bond formed by these water solubles tends to liquefy, while moisture loss tends to harden the bond so that it approaches a state of brittleness. (US Patent No. 2,643,953, Col.1, Lines 25-35).

Boehm and Schoel were not aware that these water solubles can be thermosetting in nature, if proper thermal decomposition and hydrolyzation of hemicellulose can be carried out, and are capable of being used as a water-proof adhesive. Instead, according to Boehm and Schoel patents, the "Masonoid" may be used only as a water-soluble adhesive. Since they did not recognize the bonding nature of the water soluble materials, their patents only teach the creation of a water-soluble adhesive bond. A water-soluble adhesive has only limited commercial application.

Boehm and Schoel's lack of appreciation that the water solubles from hemicellulose hydrolyzation are capable of being thermoset, if carried out according to the present invention, may be attributed to the logical development of the Masonite process. The Masonite process utilizes the natural lignin is as a binder, and not the water soluble materials, which are removed as "Masonoid" in the Masonite process. The removal of water solubles is a key feature of the Masonite process for making board products because the presence of these water solubles degrades the end product. It appears that either Boehm and Schoel did not realize that these water solubles were capable of being thermoset or that they did attempt to create a thermoset bond from the water solubles so obtained as a by-product from the Masonite process and found that such a waterproof bond was not possible. It is likely that the degree of thermal hydrolyzation in the Masonite process was not adequate to produce the necessary water solubles required to produce a thermosetting waterproof bond. As the present invention teaches, only a very specific combination of temperature and time, relating to a certain and specific lignocellulosic feedstock, will produce the required hydrolyzation and the resulting water solubles containing certain decomposition products required for the thermoset bond. In particular, the optimum temperature would be high enough to decompose and hydrolyze hemicellulose contained in the lignocellulosic material without carbonizing the hemicellulose.

Carbohydrates have also been investigated in the past as co-reactants with phenolic resins as well as the sole ingredients in the adhesive. Meigs in US patents 1,593,342, 1,801,953 and 1,868,216 carried out some of the earliest work with phenol carbohydrates combinations. The reactions used both acid and basic catalysts and after, included reactions with aniline or aliphatic anions.

Chang and Kononenko (Adhesives Age, July 1962: 36-40) developed an adhesive system in which sucrose was reacted with phenol under alkaline conditions. The adhesive so obtained is claimed to be suitable for exterior plywood production. Gibbons and Wondolowski in US patent 4,048,127 produced a soluble liquid adhesive in which the carbohydrate-urea-phenol reaction product was neutralized and further reacted with formaldehyde to form an alkaline adhesive for plywood.

More recently, Stofko in US patents 4,107,370, 4,183,997 and 4,375,194 proposed systems that used a variety of carbohydrate sources, including sucrose and starches, and an acidic catalyst as a waterproof adhesive for bonding lignocellulosic material. One of the patents also teaches using live steam under sealed press to transform the sugar-starch adhesive into a waterproof bond.

In accordance with a first aspect of the present invention there is provided a process for treating lignocellulosic material, comprising:
a) bringing lignocellulosic material in divided form rapidly into contact with high pressure steam at a temperature high enough to decompose and hydrolyse hemicellulose contained in the material without carbonization thereof;
b) maintaining the lignocellulosic material in contact with the high pressure steam only for a time sufficient to decompose and hydrolyze hemicellulose, without carbonization thereof, into low molecular weight water soluble resin material selected from pentose and hexose sugars, sugar polymers, dehydrated carbohydrates, furfural, organic acids and other decomposition products, with negligible degradation of cellulose;
c) separating at least a portion of the water soluble resin material from the lignocellulosic material, the separated water soluble resin material being usable as a thermosetting water-proof resin adhesive, the remaining lignocellulosic material being usable as thermosetting water-proof adhesive and bulking agent.

The high pressure steam is preferably at a temperature in the range 120°C to 280°C.

In accordance with a second aspect of the present invention there is provided a process of bonding; comprising heating and pressing water soluble resin material in concentrated form and produced in accordance with a process according to the first aspect of the invention against a surface to be adhered thereto at a temperature and at a pressure and for a sufficient time to polymerize, crosslink and thermoset the resin material into a water-proof adhesive bond adhering to the surface.

The temperature at which the resin material is pressed against the surface is preferably at least 160°C.

The surface may be of non-lignocellulosic material.

In accordance with a third aspect of the invention there is provided a process of producing a composite product, comprising admixing water soluble resin material produced in accordance with the first aspect of the invention with other material to produce a mixture and pressing the mixture at a temperature and at a pressure and for a sufficient time and at a sufficient pressure to polymerise, crosslink and thermoset the resin material, thereby producing a waterproof adhesive bond that bonds said other material together.

The temperature at which the mixture is pressed is preferably at least 160°C and more preferably in the range 160°C to 250°C.

The mixture may be formed into a mat.

The other material may be lignocellulosic or non-lignocellulosic material.

The water soluble resin material may be used in liquid or solid form.

In accordance with a fourth aspect of the invention there is provided a process fir treating lignocellulosic material, comprising:
a) bringing lignocellulosic material in divided form rapidly into contact with high pressure steam at a temperature high enough to decompose and hydrolyze hemicellulose contained in said lignocellulosic material without carbonization thereof;
b) maintaining the lignocellulosic material in contact with the high pressure steam for a time sufficient only for the decomposition and hydrolyzation of hemicellulose into low molecular weight, water soluble resin material selected from pentose and hexose sugars, sugar polymers, furfural, dehydrated carbohydrates, organic acids and other decomposition products;
c) separating at least a portion of the water soluble resin material from the lignocellulosic material, the separated water soluble resin material being usable as a thermosetting water-proof resin adhesive;
d) bringing the remaining hydrolyzed lignocellulosic material from step b) rapidly into contact with high pressure steam at a temperature high enough to decompose and hydrolyze cellulose without carbonization thereof;
e) maintaining the previously hydrolyzed lignocellulosic material in contact with the high pressure steam for a time sufficient for the decomposition and hydrolyzation of the cellulose into low molecular weight, water soluble resin material selected from hexose and pentose sugars, sugar polymers, hydroxymethyl furfural, furfural, dehydrated carbohydrates, organic acids and other decomposition products; and
f) separating at least a portion of the water soluble resin material from the lignocellulosic material, the separated water soluble resin material being usable as a thermosetting water-proof resin adhesive, the remaining lignocellulosic material being usable as thermosetting water-proof adhesive and bulking agent.

The process may according to the fourth aspect of the invention further comprises drying or otherwise concentrating the separated water soluble resin material from step (c).

The divided lignocellulosic material may be mixed with an acidic catalyst preferably in an amount of no more than 5% by weight, before step a) and d) to accelerate thermal decomposition and hydrolyzation of hemicellulose and cellulose into the water soluble resin material.

The water soluble resin material may be adjusted to a low pH in order to accelerate thermosetting thereof.

The lignocellulosic material may be derived from one ur more species of woody or non-woody material and may be derived from forest and agricultural plants.

The lignocellulosic material may be in the form of particle fibre, chip or a mixture thereof.

The lignin of the lignocellulosic material may be decomposed and hydrolyzed by the high pressure steam into low molecular weight lignin and lignin decomposition products.

The water soluble resin material derived from decomposition and hydrolyzation of hemicellulose and cellulose may contain a small amount of low molecular weight lignin and lignin decomposition products.

In accordance with a fifth aspect of the present invention there is provided a process of bonding, comprising heating and pressing water soluble resin material in concentrated form and produced in accordance with the fourth aspect of the invention against a surface to be adhered thereto at a temperature and at a pressure and for a sufficient time to polymerize, crosslink and thermoset the resin material into a waterproof adhesive bond adhering to the surface.

The surface may be of lignocellulosic material or non lignocellulosic material.

The mixture may also comprise water soluble resin material from step (c) of a process according to the first or fifth aspect of the invention.

The water soluble resin material may be used in liquid or solid form.

In accordance with a sixth aspect of the present invention there is provided a process of producing a composite product, comprising admixing water soluble resin material in concentrated form and produced in accordance with either of the first and fifth aspects of the invention with other material to produce a mixture and pressing the mixture at a temperature and at a pressure and for a sufficient time and at a sufficient pressure to polymerise, crosslink and thermoset the resin material into a waterproof adhesive bond binding the said other material together.

The temperature at which the mixture is pressed is preferably at least 160°C, and is preferably in the range 160°C to 250°C.

The mixture may be formed into a mat.

The particulate material may be lignocellulosic material or non-lignocellulosic material.

The mixture may also comprises water soluble resin material from step (c) of a process according to the first or fourth aspects of the invention.

The water soluble resin material may be used in liquid or solid form.

In accordance with a seventh aspect of the present invention there is provided a process of producing a composite product, comprising admixing treated lignocsllulosic material produced by a process according to the first or fourth aspect of the invention with other material to produce a mixture and pressing the mixture at a temperature and at a pressure and for a sufficient time to polymerise, crosslink and thermoset water soluble resin material in the lignocellulosic material into a waterproof resin material adhering to and binding together the particulate material.

The other material may be lignocellulosic material.

In contrast, the present invention utilizes the water solubles, which consist of pentose and hexose sugars, sugar polymers, furfural, dehydrated carbohydrates, organic acids, and other decomposition products, and which are extracted from hemicellulose and cellulose hydrolyzation of any lignocellulosic material. These extracted water solubles, along with a small portion of lignin decomposition products, without any chemical modification or catalyst, in concentrated form, can be used as a thermosetting waterproof resin adhesive for bonding lignocellulosic and non-lignocellulosic material. In addition the hydrolyzed lignocellulose can be further processed, utilizing the water solubles to bond and to bulk ,in situ, other components of the lignocellulose, or in combination vith other lignocellulosic material, to produce a reconstituted composite product with good mechnical strength and superb dimensional stability.

Embodiments of the present invention will be described and illustrated in detail in the following examples:

### EXAMPLE 1

White spruce and Jack pine saw mill residues containing about 7% bark material and 16% moisture content were hammer milled to pass a 6.4 mm (1/4 inch) screen and then were treated with various steam temperatures for different durations. A total of 15 batches of residues were treated at 4 different high pressure steams with temperatures ranging from 215 deg. C to 260 deg. C for a duration of 1/2 to 11 minutes. After steaming, the treated mill residue was washed with warm voter and the elute was evaporated under vacuum to a concentration of about 50% solids as a liquid resin adhesive. The liquid resin adhesive was dark brown in colour with a pH ranging from about 2.8 to 4.3 The liquid resin had a low viscosity and made it easy to spray.

Poplar wafers (approximately 38 mm length, 0.7 mm thickness and 6 to 50 mm width) were sprayed with 6 % liquid adhesive (solids based on O.D. wafer weight). After spraying, the wafers were dried to a moisture content of about 3-5% before forming the mat. A total of 38 waferboards (60 x 60 x 1.11 cm) with a density of about 660 kg/m³ were made with one pressing condition (230 deg. C temperature, 12 minutes time and 35 kg/cm² closing pressure). Test results are summarized in the following Table 1. Canadian standard CAN-0437.0-M 86 is also included for comparison.

**TABLE 1**

| RESIN TREATMENT | BOARD DENSITY | | MOR (MPa) | MOE (GPa) | IB (kPa) | THICKNESS SWELLING |
|---|---|---|---|---|---|---|
| Temp & Time | Kg/M³ | DRY | BOILED | | | (%) |
| 260 deg C at | | | | | | |
| 1/2 min | 660 | 17.3 | 4.8 | 5.12 | 370 | 8.7 |
| 1 min | 650 | 21.6 | 9.5 | 5.84 | 430 | 3.5 |
| 1 1/2 | 670 | 22.3 | 12.4 | 5.88 | 485 | 2.6 |

| 245 deg C at | | | | | | |
|---|---|---|---|---|---|---|
| 1 min | 650 | 18.4 | 7.2 | 5.27 | 380 | 7.8 |
| 2 min | 670 | 19.6 | 9.4 | 5.17 | 480 | 4.2 |
| 3 min | 650 | 22.8 | 11.4 | 5.42 | 560 | 2.9 |

| 230 deg C at | | | | | | |
|---|---|---|---|---|---|---|
| 1 min | 660 | 18.2 | 0 | 4.27 | 130 | - |
| 3 min | 670 | 21.9 | 8.9 | 5.76 | 330 | 6.6 |
| 5 min | 660 | 23.4 | 8.8 | 5.62 | 555 | 6.3 |
| 7 min | 660 | 24.1 | 13.3 | 5.86 | 530 | 2.8 |
| 9 min | 660 | 23.4 | 11.6 | 5.58 | 555 | 2.7 |

| 215 deg C at | | | | | | |
|---|---|---|---|---|---|---|
| 5 min | 640 | 16.2 | 0 | 5.05 | 190 | - |
| 7 min | 630 | 19.8 | 0 | 5.11 | 300 | - |
| 9 min | 650 | 21.7 | 6.7 | 5.20 | 390 | 10.6 |
| 11 min | 650 | 22.4 | 9.8 | 5.46 | 580 | 5.3 |
| CSA STANDARD CAN3-0437.0-M 86 | | 17.2 | 8.6 | 3.10 | 345 | 25.0 |

### EXAMPLE 2

This example shows the particle size of the feed material and shape in relation to quality of the thermosetting resin adhesive produced. Fresh poplar chips with about 25% moisture content were divided into two equal parts A & B. However, chips of part B were hammer milled to pass a 6.4 mm screen before steam treatment. Both parts A & B were then treated with high pressure steam at 230 deg. C for 3 minutes. Liquid resin adhesive was extracted and concentrated separately from the treated poplar chips and particles. Two batches of 6 waferboards were fabricated with resin adhesives extracted from poplar wood A & B under identical conditions. The following Table 2 shows the test results which indicate that resin adhesive extracted from hammer milled poplar particles vas better than that extracted from poplar chips of the same origins, and processed under the same manufacturing conditions.

**TABLE 2**

| Summary of waferboards bonded with 6% resin adhesives extracted from poplar chips and poplar particles | | | | | | |
|---|---|---|---|---|---|---|
| RESIN TREATMENT | BOARD DENSITY | | MOR (MPa) | MOE (GPa) | IB (kPa) | THICKNESS SWELLING |
| Temp & Time | Kg/M³ | DRY | BOILED | | | (%) |
| 230 deg C at 3 minutes | | | | | | |
| CHIPS | 650 | 19.8 | 8.7 | 5.30 | 445 | 4.2 |
| PARTICLES | 670 | 23.4 | 11.8 | 6.00 | 560 | 3.5 |
| (Press temperature: 230 deg C, Press time: 10 min) | | | | | | |

### EXAMPLE 3

This example demonstrates the use of tree bark for the extraction of resin adhesive. Fresh white pine bark with about 12% wood material containing about 53% moisture content was hammer milled to pass a 6.4 mm screen and was then treated with high pressure steam at 230 deg. C for 5 minutes. About 16% liquid solids resin by weight of O.D. bark was extracted from the steam treated bark and was concentrated to a liquid resin with 48% solids. The bark resin was dark brown in colour with a pH of 3.2. Three homogeneous particleboards with 8% resin solids were fabricated and hot pressed at 230 deg. C under a pressure of 40 kg/cm² for ten minutes. Test results are listed in Table 3.

**TABLE 3**

| RESIN TREATMENT | BOARD DENSITY | MOR (MPa) | | MOE (GPa) | IB (kPa) | THICKNESS SWELLING |
|---|---|---|---|---|---|---|
| Temp & Time | Kg/M³ | DRY | BOILED | | | (%) |
| 230 deg C for 5 min | 620 | 12.6 | 4.6 | 2.87 | 580 | 5.7 |
| | 670 | 15.2 | 6.8 | 3.37 | 720 | 4.4 |
| | 710 | 19.3 | 8.2 | 3.95 | 810 | 3.2 |

### EXAMPLE 4

This example demonstrates the extraction of resin adhesive from agricultural residue of sugarcane bagasse, a pulpy residue after sucrose was extracted from cane sugar production. The bagasse, containing about 14% moisture content vas treated with high pressure steam at 220 deg. C for 7 min. About 12 Z resin solids by weight of O.D. bagasse was extracted and concentrated to a liquid adhesive vith a solids content of about 52%. Dried bagasse fibres were sprayed with 8% of the liquid adhesive and pressed at 230 deg. C for 10 minutes to form homogeneous particleboards (600 x 600 x 12.5 mm) with various board densities. Test results of 3 bagasse particleboards are summarized in the following Table 4.

**TABLE 4**

| Summary of bagasse particleboards bonded with 8% adhesive extracted from sugarcane bagasse. | | | | | | |
|---|---|---|---|---|---|---|
| RESIN TREATMENT | BOARD DENSITY | MOR (MPa) | | MOE (GPa) | IB (kPa) | THICKNESS SWELLING |
| Temp & Time | Kg/M³ | DRY | BOILED | | | (%) |
| 220 deg C for 7 min | 670 | 15.7 | 7.1 | 4.76 | 375 | 5.7 |
| | 730 | 19.3 | 9.6 | 5.12 | 460 | 5.2 |
| | 800 | 22.6 | 12.3 | 5.60 | 590 | 3.9 |

### EXAMPLE 5

This example illustrates the use of another agricultural by-product wheat straw, as raw material for the production of the thermosetting adhesive. Dry wheat straw was chopped to about 20 cm in length and then treated vith high pressure steam at 240 deg. C for 2 minutes. About 14% water solubles by weight of straw was extracted and concentrated to about 49% solids as liquid adhesive.

Fine spruce particles of less than 2 mm were sprayed with 10% of the liquid adhesive. Larger particles, betwen 2 mm to 6 mm, were sprayed vith 8% solids of the liquid adhesive. Three particleboards (600 x 600x 12.5 mm) of 3-layer construction were formed with fine particles in the surface layers and coarse particles in the core. All boards were targeted to a density of 770 kg/M³ and hot pressed at 230 deg. C for 8, 10 and 12 minutes respectively. Test results are summarized in the following Table 5.

**TABLE 5**

| PRESS TIME | BOARD DENSITY | MOR (MPa) | | MOE (GPa) | IB (kPa) | THICKNESS SWELLING |
|---|---|---|---|---|---|---|
| (min) | Kg/M³ | DRY | BOILED | | | (%) |
| 8 min | 770 | 18.2 | 0 | 3.26 | 280 | - |
| 10 min | 780 | 21.3 | 7.6 | 4.42 | 485 | 4.5 |
| 12 min | 780 | 22.6 | 9.7 | 5.16 | 620 | 3.6 |

### EXAMPLE 6

Fresh birch chips containing about 7% bark material and about 70% moisture content were treated with high pressure steam of 230 deg. C for 5 minutes. The chips were washed vith water twice and squeezed to extracted as much elute as possible. The elute was evaporated under vacuum to a concentrate containing about 3% solids liquid adhesive which was then freeze dried to a solid state of fine powder. This fine powdered resin adhesive was easy to handle and could be bagged and stored. Poplar wafers were first sprayed with 1% molten slack wax and followed vith 4% resin powder. Three waferbords were made vith the powdered adhesive at a press temperature of 230 deg. C under a pressure of 35 kg/cm² for three different press time of 8, 10, and 12 minutes. Test results of these 3 waferboards are listed in Table 6.

**TABLE 6**

| PRESS TIME | BOARD DENSITY | MOR (MPa) | | MOE (GPa) | IB (kPa) | THICKNESS SWELLING |
|---|---|---|---|---|---|---|
| | Kg/M³ | DRY | BOILED | | | (%) |
| 8 min | 660 | 16.2 | 0 | 4.78 | 390 | - |
| 10 min | 670 | 22.0 | 10.9 | 5.38 | 570 | 5.6 |
| 12 min | 660 | 22.8 | 11.0 | 5.61 | 630 | 3.7 |

### EXAMPLE 7

This example illustrates the use of low steam temperature in combination with an acid catalyst to hydrolyze the hemicellullose into water soluble carbohydrates resin material from mixture of aspen and spruce wood at about equal proportion by chip weight.

Fresh mixture of aspen and spruce chips were divided into two batches. One batch was soaked in a 0.4% solution of sulfuric acid for 24 hours and then steamed at 150 deg. C for 25 minutes. The other batch, without the addition of acid was further divided into 3 groups and each group was also steamed at 150 deg. C for 60, 120 and 180 minutes respectively. Water solubles were extracted from the two treated batches of aspen and spruce mixed chips and concentrated to abuot 46% solids as resin material. Before use for waferboard bonding, the liquid resin adhesive obtained from acid catalyzed chips was adjusted with sodium hydroxide to a pH level of 3.0. Twelve waferboards were fabricated with four resin adhesives derived from the two batches of chips. Resin content for all waferboard was 6%. Press temperature was 230 deg. C. for 12 minutes. Results are summmarized in the following Table 7.

**TABLE 7**

| STEAM TREATMENT | BOARD DENSITY | | MOR (MPa) | MOE (GPa) | IB (kPa) | THICKNESS SWELLING |
|---|---|---|---|---|---|---|
| | Kg/M³ | DRY | BOILED | | | (%) |
| Poplar chips treated at 150 deg C for 40 min | 660 | 16.2 | 0 | 3.23 | 380 | - |
| 120 min | 650 | 19.3 | 4.8 | 3.76 | 430 | 10.8 |
| 180 min | 660 | 22.7 | 11.6 | 4.95 | 570 | 5.2 |
| Poplar chips with H₂SO₄ treated at 150 C for 25 min | 660 | 23.4 | 12.8 | 516 | 590 | 3.2 |

### EXAMPLE 8

This example shows the extraction of water soluble resin material from previously hydrolyzed lignocellulosic material. This previously hydrolyzed lignocellulosic material consists mainly of cellulose and lignin products with a small portion of hemicellulose and water solubles.

The poplar particle residue processed in Example 2, after being treated with high pressure steam and after the water solubles from the hydrolyzed hemicellulose had been extracted, was sprayed with a 0.4% sulfuric acid solution. The acid content of the residue was about 1.2% based on O.D. weigth of the residue. The acid laden residue was steamed at 210 deg. C for 14 minutes to cause hydrolysis of the cellulose to yield water soluble resin material. About 32% water solubles by O.D. weight of the lignocellulose residue was obtained. The liquid resin was adjusted with soluble base of NaOH to a pH of 3.0 before being concentrated as liquid resin adhesive with a solids content of about 48%.

Three poplar waferboards were made vith 6% spray of the liquid resin adhesive. Test results are summarized in the following Table 8.

**TABLE 8**

| PRESS TIME | BOARD DENSITY | MOR (MPa) | | MOE (GPa) | IB (kPa) | THICKNESS SWELLING |
|---|---|---|---|---|---|---|
| | Kg/M³ | DRY | BOILED | | | (%) |
| 230 deg c for 8 min | 660 | 22.6 | 8.9 | 4.26 | 490 | 8.6 |
| 10 min | 650 | 23.3 | 11.2 | 5.33 | 555 | 5.2 |
| 12 min | 650 | 23.8 | 13.3 | 5.57 | 630 | 3.7 |

### EXAMPLE 9

This example illustrates the versatility of the process in that both thermosetting adhesive and composite panel products can be produced from the same lignocellulosic material after the steam treatment.

Green poplar chips were treated vith high pressure steam at 245 deg. C for 90 seconds. After the steam treatment, about 6% voter solubles by O.D/ weight of chips was extracted with hot voter elute, concentrated to abut 50% solids content and the resin adhesive was used for making waferboard. The residual chips were then mixed vith 20% green poplar chips and refined with a disc refiner to produce fibres for manuacture of medium density fibreboard. No adhesive was added to the fibres as there was enough resin material remaining in the steam treated fibre material for bonding. Test results for waferboards and MDF are summarized in the following Table 9.

**TABLE 9**

| PRESS TIME | BOARD DENSITY | | MOR (MPa) | MOE (GPa) | IB (kPa) | THICKNESS SWELLING |
|---|---|---|---|---|---|---|
| | Kg/M³ | DRY | BOILED | | | (%) |
| | WAFERBOARD - 6% Resin | | | | | |
| 230 deg C 12 min | 660 | 21.1 | 8.9 | 5.62 | 530 | 4.3 |

| | MDF - 0% Resin Addition | | | | | |
|---|---|---|---|---|---|---|
| 230 deg C 12 min | 800 | 22.6 | 11.8 | 4.96 | 650 | 5.7 |
| | | | | | | |

### EXAMPLE 10.

This example shows the use of a mixture of water soluble resin material derived from hemicellulose and cellulose of poplar chips. The voter soluble resin adhesives collected from Examples 2 and 8 were mixed at a ratio of 1:1 based on resin solids weight with aicidity being adjusted to pH 2.7. Waferboards made with this mixed resin adhesives derived separately from hemicellulose and cellulose of poplar chips possessed very similar physical properties to those waferboards bonded with water soluble resin derived from hemicellulose and cellulose respectively. Test results are summarised in Table 10.

**TABLE 10**

| RESIN ORIGIN | BOARD DENSITY | MOR | | MOE (MPa) | IB (kPa) | THICK SWELL | LINEAR EXPAN |
|---|---|---|---|---|---|---|---|
| | kg/M³ | DRY | BOILED | | | (%) | (%) |
| | | (MPa) | | | | | |
| 6% | 583 | 19.1 | 8.9 | 4.65 | 368 | 7.8 | 0.21 |
| Mixed | 648 | 23.4 | 12.6 | 5.88 | 516 | 6.5 | 0.22 |
| Resin | 711 | 30.5 | 16.5 | 6.43 | 724 | 6.0 | 0.19 |
| CSA Standard CAN3-0437.0-M86 | | 17.2 | 8.6 | 3.10 | 345 | 25.0 | 0.40 |

### EXAMPLE 11

This example demonstrates the advantage of the acidic nature of the resin material obtained from acid hydrolysis of hemicellulose and cellulose as shown in Examples 7 and 8. The highly acidic resin obtained from acid hydrolysis of poplar cellsulsoe in Example 8 was mixed with resin materialobtained from hydrolysis of poplar hemicellulose in Example 7. These two liquid resins were mixed to have a pH adjusted to 2.7. This mixed and highly acidic resin was used to make waferboard. Six waferboards (3 layer, 11.1mm thickness) were made with 40% by weight of 0.015" (0.40 mm) thin wafers lended with 10% resin solids and 60% of 0.028" (0.71 mm) core wafers with 8% resin solids. Both face and core wafers contained 1% slack wax. Press temperature of 220 deg C. was used with press times of 5, 6, and 7 minutes. Test results are summarized in Table 11. It is evident that the highly acidic resin produced excellent waferboard but at a relaltively lower platen temperature and shorter press time.

**TABLE 11**

| PRESS TIME | BOARD DENSITY | MOR | | MOE (GPa) | IB (kPa) | THICKNESS SWELLING |
|---|---|---|---|---|---|---|
| (Min) | kg/M³ | DRY | BOILED | | | (%) |
| | | (MPa) | | | | |
| 220 C 5 | 657 | 29.2 | 9.7 | 5.22 | 579 | 5.3 |
| 6 | 662 | 31.6 | 13.8 | 6.78 | 668 | 4.7 |
| 7 | 650 | 30.3 | 15.2 | 6 88 | 702 | 3.3 |

### EXAMPLE 12

This example demonstrates the capability of the resin binder extracted from spruce and pine wood (245 deg. C for 3 min) for bonding foundry sands.

60 grams and 40 grams of liquid resin, with a solids content of 50% were mixed respectively with 2 kg of AFS GEN 60 sand. The resin coated sand was then used to produce 6.3 mm thick tensile specimens (dogbones) by heating hand-rammed sand between a pair of hot plates at 260 deg. C for various times to cure and thermoset the resin. All heated solids turned dark brown or black in colour.

Edge retention and surface definition, etc., seemed normal. The percentage of liquid resin curing time and tensile strength were:

| Curing time | Tensile Strength (kPa) | |
|---|---|---|
| (min at 250 C) | 1% resin | 1.5% resin |
| 2 | 525 | 628 |
| 4 | 522 | 676 |
| 8 | 607 | 738 |
| Commercial resin | 700 | |

Strength figures are the average of two tests. These strength properties appear adequate for bonding foundry sands. Test specimens were made three weeks later from the original batch of bagged resin coated sand. Tensile strengths were not changed. This indicates the pre-mixed sand has a long shelf life, provided that it is not allowed to dry out.

The BCIRA Hot Distortion Test determines the distortion of a 100 x 25 x 6.3 mm test specimen held over a flame. The specimen is held fixed at one end, and movement is monitored at the free end. Test specimens prepared three weeks after the resin binder was mixed with sand and cured between 4 and 6 minutes showed slightly more expansion than normal, followed by complete failure after 90 to 120 seconds.

These test results indicate the potential of resin binder extracted from lignocellulose for bonding foundry sand.

## Claims

1. A process for treating lignocellulosic material, comprising:
a) bringing lignocellulosic material in divided form rapidly into contact with high pressure steam at a temperature high enough to decompose and hydrolyse hemicellulose contained in the material without carbonization thereof;
b) maintaining the lignocellulosic material in contact with the high pressure steam only for a time sufficient to decompose and hydrolyze hemicellulose, without carbonization thereof, into low molecular weight water soluble resin material selected from pentose and hexose sugars, sugar polymers, dehydrated carbohydrates, furfural, organic acids and other decomposition products, with negligible degradation of cellulose;
c) separating at least a portion of the water soluble resin material from the lignocellulosic material, the separated water soluble resin material being usable as a thermosetting water-proof resin adhesive, the remaining lignocellulosic material being usable as thermosetting water-proof adhesive and bulking agent.

2. A process according to claim 1 wherein the high pressure steam is at a temperature in the range 120°C to 280°C.

3. A process of bonding, comprising heating and pressing water soluble resin material in concentrated form and produced in accordance with a process according to either preceding claim against a surface to be adhered thereto at a temperature and at a pressure and for a sufficient time to polymerize, crosslink and thermoset the resin material into a water-proof adhesive bond adhering to the surface.

4. A process according to claim 3, wherein said temperature at which the resin material is pressed against the surface is at least 160°C.

5. A process according to claim 3 or 4 wherein said surface is of non-lignocellulosic material.

6. A process of producing a composite product, comprising admixing water soluble resin material produced in accordance with either of claims 1 and 2 with other material to produce a mixture and pressing the mixture at a temperature and at a pressure and for a sufficient time and at a sufficient pressure to polymerise crosslink and thermoset the resin material, thereby producing a waterproof adhesive bond that binds said other material together.

7. A process according to claim 6, wherein said temperature at which the mixture is pressed is at least 160°C.

8. A process according to claim 6, wherein said temperature at which the mixture is pressed is in the range 160°C to 250°C.

9. A process according to any of claims 6 to 8, wherein the mixture is formed into a mat.

10. A process according to any of claims 6 to 9, wherein said other material is lignocellulosic material.

11. A process according to any of claims 6 to 9 wherein the said other material is non-lignocellulosic material.

12. A process according to any of claims 6 to 11, wherein the water soluble resin material is used in liquid or solid form.

13. A process for treating lignocellulosic material, comprising:
a) bringing lignocellulosic material in divided form rapidly into contact with high pressure steam at a temperature high enough to decompose and hydrolyze hemicellulose contained in said lignocellulosic material without carbonization thereof;
b) maintaining the lignucellulosic material in contact with the high pressure steam for a time sufficient only for the decomposition and hydrolyzation of hemicellulose into low molecular weight, water soluble resin material selected from pentose and hexose sugars, sugar polymers, furfural, dehydrated carbohydrates, organic acids and other decomposition products;
c) separating at least a portion of the water soluble resin material from the lignocellulosic material, the separated water soluble resin material being usable as a thermosetting water-proof resin adhesive;
d) bringing the remaining hydrolyzed lignocellulosic material from step b) rapidly into contact with high pressure steam at a temperature high enough to decompose and hydrolyze cellulose without carbonization thereof;
e) maintaining the previously hydrolyzed lignocellulosic material in contact with the high pressure steam for a time sufficient for the decomposition and hydrolyzation of the cellulose into low molecular weight, water soluble resin material selected from hexose and pentose sugars, sugar polymers, hydroxymethyl furfural, furfural, dehydrated carbohydrates, organic acids and other decomposition products; and
f) separating at least a portion of the water soluble resin material from the lignocellulosic material, the separated water soluble resin material being usable as a thermosetting water-proof resin adhesive, the remaining lignocellulosic material being usable as thermosetting water-proof adhesive and bulking agent.

14. A process according to claim 13, further comprising drying or otherwise concentrating the separated water soluble resin material from step (c).

15. A process according to claim 14, wherein the separated water soluble resin material is dried.

16. A process according to any of claims 13 to 15, wherein the divided lignocellulosic material is mixed with an acidic catalyst before steps a) and d) to accelerate thermal decomposition and hydrolyzation of hemicellulose and cellulose into the water soluble resin material.

17. A process according to any of claims 13 to 16 wherein the water soluble resin material is adjusted to a low pH in order to accelerate thermosetting thereof.

18. A process according to any of claims 13 to 17, wherein the lignocellulosic material is derived from one or more species of woody or non-woody material.

19. A process according to any of claims 13 to 18, wherein the lignocellulosic material is in the form of particle, fibre, chip or a mixture thereof.

20. A process according to any of claims 13 to 19, wherein lignin of the lignocellulosic material is decomposed and hydrolyzed by the high pressure steam into low molecular weight lignin and lignin decomposition products.

21. A process according to any of claims 13 to 20, wherein the water soluble resin material derived from decomposition and hydrolyzation of hemicellulose and cellulose contains a small amount of low molecular weight lignin and lignin decomposition products.

22. A process of bonding, comprising heating and pressing water soluble resin material in concentrated form and produced in accordance with a process according to any of claims 13 to 21 against a surface to be adhered thereto at a temperature and at a pressure and for a sufficient time to polymerize, crosslink and thermoset the resin material into a waterproof adhesive bond adhering to the surface.

23. A process according to claim 22, wherein said surface is of lignocellulosic material.

24. A process according to claim 22, wherein said surface is of non-lignocellulosic material.

25. A process according to any of claims 22 to 24, wherein the mixture also comprises water soluble resin material from step (c) of a process according to any of claims 1, 2 and 13 to 21.

26. A process according to any of claims 22 to 25, wherein the water soluble resin material is used in liquid or solid form.

27. A process of producing a composite product, comprising admixing water soluble resin material in concentrated form and produced in accordance with any of claims 1, 2 and 13 to 22 with other material to produce a mixture and pressing the mixture at a temperature and at a pressure and for a sufficient time and at a sufficient pressure to polymerise, crosslink and thermoset the resin material into a waterproof adhesive bond binding the said other material together.

28. A process according to claim 27, wherein said temperature at which the mixture is pressed is at least 160°C.

29. A process according to claim 28, wherein said temperature at which the mixture is pressed is in the range 160°C to 250°C.

30. A process according to any of claims 27 to 29, wherein the mixture is formed into a mat.

31. A process according to any of claims 27 to 30, wherein the particulate material is lignocellulosic material.

32. A process according to any of claims 27 to 31 wherein the particulate material is non-lignocellulosic material.

33. A process according to any of claims 27 to 32, wherein the mixture also comprises water soluble resin material from step (c) of a process according to any of claims 1 and 2 or claims 13 to 21.

34. A process according to any of claims 27 to 33 wherein the water soluble resin material is used in liquid or solid form.

35. A process of bonding comprising heating and pressing treated lignocellulosic material produced by a process according to either of claims 1 and 2 or produced by a process according to any of claims 13 to 21 against a surface to be adhered thereto at a temperature and at a pressure for a sufficient time to polymerise, crosslink and thermoset water soluble resin material in the lignocellulosic material into a waterproof adhesive bond adhering to the surface and bonding the lignocellulosic material to the surface.

36. A process of producing a composite product, comprising admixing treated lignocellulosic material produced by a process according to either of claims 1 and 2 or produced by a process according to any of claims 13 to 21 with other material to produce a mixture and pressing the mixture at a temperature and at a pressure and for a sufficient time to polymerise, crosslink and thermoset water soluble resin material in the lignocellulosic material into a waterproof adhesive bond adhering to and binding together the particulate material.

37. A process according to claim 36, wherein the other material is lignocellulosic material.

## Patentansprüche

1. Verfahren zur Behandlung eines lignocellulosehaltigen Materials, bei dem man:
a) lignocellulosehaltiges Material in verteilter Form bei einer zur Zersetzung und Hydrolyse von in dem Material enthaltener Hemicellulose ohne Carbonisierung ausreichenden Temperatur schnell mit Hochdruckdampf in Kontakt bringt;
b) das lignocellulosehaltige Material nur so lange mit dem Hochdruckdampf in Kontakt hält, daß Hemicellulose bei vernachlässigbarem Abbau von Cellulose ohne Carbonisierung zu niedermolekularem, wasserlöslichem Harzmaterial, ausgewählt unter Pentose- und Hexose-Zuckern, Zuckerpolymeren, dehydratisierten Kohlenhydraten, Furfural, organischen Säuren und anderen Zersetzungsprodukten, zersetzt und hydrolysiert wird;
c) zumindest einen Teil des wasserlöslichen Harzmaterials von dem lignocellulosehaltigen Material abtrennt, wobei das abgetrennte wasserlösliche Harzmaterial als warmhärtbarer wasserfester Harzklebstoff verwendet werden kann und das verbleibende lignocellulosehaltige Material als warmhärtbarer wasserfester Klebstoff und Füllstoff verwendet werden kann.

2. Verfahren nach Anspruch 1, bei dem der Hochdruckdampf eine Temperatur im Bereich von 120°C bis 280°C aufweist.

3. Verbindungsverfahren, bei dem man nach einem Verfahren nach einem der vorhergehenden Ansprüche hergestelltes wasserlösliches Harzmaterial in konzentrierter Form erhitzt und gegen eine damit zu verklebende Oberfläche preßt, was bei einer solchen Temperatur und einem solchen Druck und über einen so langen Zeitraum geschieht, daß das Harzmaterial zu einer auf der Oberfläche haftenden wasserfesten Klebverbindung polymerisiert, vernetzt und warmgehärtet wird.

4. Verfahren nach Anspruch 3, bei dem die Temperatur, bei der das Material gegen die Oberfläche gepreßt wird, mindestens 160°C beträgt.

5. Verfahren nach Anspruch 3 oder 4, bei dem die Oberfläche aus nicht lignocellulosehaltigem Material besteht.

6. Verfahren zur Herstellung eines Verbundprodukts, bei dem man nach Anspruch 1 oder 2 hergestelltes wasserlösliches Harzmaterial mit anderem Material vermischt und die erhaltene Mischung verpreßt, was bei einer solchen Temperatur und einem solchen Druck und über einen so langen Zeitraum und bei einem so hohen Druck geschieht, daß das Harzmaterial polymerisiert, vernetzt und warmgehärtet wird, wodurch sich eine wasserfeste Klebverbindung ergibt, die das andere Material zusammenbindet.

7. Verfahren nach Anspruch 6, bei dem die Temperatur, bei der die Mischung verpreßt wird, mindestens 160°C beträgt.

8. Verfahren nach Anspruch 6, bei dem die Temperatur, bei der die Mischung verpreßt wird, im Bereich von 160°C bis 250°C liegt.

9. Verfahren nach einem der Ansprüche 6 bis 8, bei dem man die Mischung zu einer Matte formt.

10. Verfahren nach einem der Ansprüche 6 bis 9, bei dem man als anderes Material lignocellulosehaltiges Material einsetzt.

11. Verfahren nach einem der Ansprüche 6 bis 9, bei dem man als anderes Material nicht lignocellulosehaltiges Material einsetzt.

12. Verfahren nach einem der Ansprüche 6 bis 11, bei dem man das wasserlösliche Harzmaterial in flüssiger oder fester Form verwendet.

13. Verfahren zur Behandlung eines lignocellulosehaltigen Materials, bei dem man:
a) lignocellulosehaltiges Material in verteilter Form bei einer zur Zersetzung und Hydrolyse von in dem lignocellulosehaltigem Material enthaltener Hemicellulose ohne Carbonisierung ausreichenden Temperatur schnell mit Hochdruckdampf in Kontakt bringt;
b) das lignocellulosehaltige Material nur so lange mit dem Hochdruckdampf in Kontakt hält, daß Hemicellulose zu niedermolekularem, wasserlöslichem Harzmaterial, ausgewählt unter Pentose- und Hexose-Zuckern, Zuckerpolymeren, Furfural, dehydratisierten Kohlenhydraten, organischen Säuren und anderen Zersetzungsprodukten, zersetzt und hydrolysiert wird;
c) zumindest einen Teil des wasserlöslichen Harzmaterials von dem lignocellulosehaltigen Material abtrennt, wobei das abgetrennte wasserlösliche Harzmaterial als warmhärtbarer wasserfester Harzklebstoff verwendet werden kann;
d) das verbleibende hydrolysierte lignocellulosehaltige Material aus Schritt b) bei einer zur Zersetzung und Hydrolyse von Cellulose ohne Carbonisierung ausreichenden Temperatur schnell mit Hochdruckdampf in Kontakt bringt;
e) das zuvor hydrolysierte lignocellulosehaltige Material über einen zur Zersetzung und Hydrolyse der Cellulose zu niedermolekularem, wasserlöslichem Harzmaterial, ausgewählt unter Hexose- und Pentose-Zuckern, Zuckerpolymeren, Hydroxymethylfurfural, Furfural, dehydratisierten Kohlenhydraten, organischen Säuren und anderen Zersetzungsprodukten, ausreichend langen Zeitraum mit dem Hochdruckdampf in Kontakt hält und
f) zumindest einen Teil des wasserlöslichen Harzmaterials von dem lignocellulosehaltigen Material abtrennt, wobei das abgetrennte wasserlösliche Harzmaterial als warmhärtbarer wasserfester Harzklebstoff verwendet werden kann und das verbleibende lignocellulosehaltige Material als warmhärtbarer wasserfester Klebstoff und Füllstoff verwendet werden kann.

14. Verfahren nach Anspruch 13, bei dem man außerdem auch noch das abgetrennte wasserlösliche Harzmaterial aus Schritt (c) trocknet oder anderweitig aufkonzentriert.

15. Verfahren nach Anspruch 14, bei dem man das abgetrennte wasserlösliche Harzmaterial trocknet.

16. Verfahren nach einem der Ansprüche 13 bis 15, bei dem man das verteilte lignocellulosehaltige Material vor den Schritten a) und d) zur Beschleunigung der thermischen Zersetzung und Hydrolyse von Hemicellulose und Cellulose zu wasserlöslichem Harzmaterial mit einem sauren Katalysator vermischt.

17. Verfahren nach einem der Ansprüche 13 bis 16, bei dem man das wasserlösliche Harzmaterial zur Beschleunigung seiner Warmhärtung auf einen niedrigen pH-Wert einstellt.

18. Verfahren nach einem der Ansprüche 13 bis 17, bei dem man das lignocellulosehaltige Material von einer oder mehreren Arten von holzhaltigem oder nicht holzhaltigem Material gewinnt.

19. Verfahren nach einem der Ansprüche 13 bis 18, bei dem das lignocellulosehaltige Material in Form von Partikeln, Fasern, Schnitzeln oder Gemischen davon vorliegt.

20. Verfahren nach einem der Ansprüche 13 bis 19, bei dem man das Lignin des lignocellulosehaltigen Materials durch den Hochdruckdampf zu niedermolekularem Lignin und Lignin-Zersetzungsprodukten zersetzt und hydrolysiert.

21. Verfahren nach einem der Ansprüche 13 bis 20, bei dem das durch Zersetzung und Hydrolyse von Hemicellulose und Cellulose gewonnene wasserlösliche Harzmaterial eine geringe Menge an niedermolekularem Lignin und Lignin-Zersetzungsprodukten enthält.

22. Verbindungsverfahren, bei dem man nach einem Verfahren nach einem der Ansprüche 13 bis 21 hergestelltes wasserlösliches Harzmaterial in konzentrierter Form erhitzt und gegen eine damit zu verklebende Oberfläche preßt, was bei einer solchen Temperatur und einem solchen Druck und über einen so langen Zeitraum geschieht, daß das Harzmaterial zu einer auf der Oberfläche haftenden wasserfesten Klebverbindung polymerisiert, vernetzt und warmgehärtet wird.

23. Verfahren nach Anspruch 22, bei dem die Oberfläche aus lignocellulosehaltigem Material besteht.

24. Verfahren nach Anspruch 22, bei dem die Oberfläche aus nicht lignocellulosehaltigem Material besteht.

25. Verfahren nach einem der Ansprüche 22 bis 24, bei dem die Mischung außerdem auch noch wasserlösliches Harzmaterial aus Schritt (c) eines Verfahrens nach einem der Ansprüche 1, 2 und 13 bis 21 enthält.

26. Verfahren nach einem der Ansprüche 22 bis 25, bei dem man das wasserlösliche Harzmaterial in flüssiger oder fester Form verwendet.

27. Verfahren zur Herstellung eines Verbundprodukts, bei dem man nach einem der Ansprüche 1, 2 und 13 bis 22 hergestelltes wasserlösliches Harzmaterial in konzentrierter Form mit anderem Material vermischt und die erhaltene Mischung verpreßt, was bei einer solchen Temperatur und einem solchen Druck und über einen so langen Zeitraum und bei einem so hohen Druck geschieht, daß das Harzmaterial zu einer das andere Material zusammenbindenden wasserfesten Klebverbindung polymerisiert, vernetzt und warmgehärtet wird.

28. Verfahren nach Anspruch 27, bei dem die Temperatur, bei der die Mischung verpreßt wird, mindestens 160°C beträgt.

29. Verfahren nach Anspruch 28, bei dem die Temperatur, bei der die Mischung verpreßt wird, im Bereich von 160°C bis 250°C liegt.

30. Verfahren nach einem der Ansprüche 27 bis 29, bei dem man die Mischung zu einer Matte formt.

31. Verfahren nach einem der Ansprüche 27 bis 30, bei dem man als teilchenförmiges Material lignocellulosehaltiges Material einsetzt.

32. Verfahren nach einem der Ansprüche 27 bis 31, bei dem man als teilchenförmiges Material nicht lignocellulosehaltiges Material einsetzt.

33. Verfahren nach einem der Ansprüche 27 bis 32, bei dem die Mischung außerdem auch noch wasserlösliches Harzmaterial aus Schritt (c) eines Verfahrens nach einem der Ansprüche 1, 2 oder 13 bis 21 enthält.

34. Verfahren nach einem der Ansprüche 27 bis 33, bei dem man das wasserlösliche Harzmaterial in flüssiger oder fester Form verwendet.

35. Verbindungsverfahren, bei dem man nach einem Verfahren nach Anspruch 1 oder 2 oder nach einem Verfahren nach einem der Ansprüche 13 bis 21 hergestelltes behandeltes lignocellulosehaltiges Material erhitzt und gegen eine damit zu verklebende Oberfläche preßt, was bei einer solchen Temperatur und einem solchen Druck und über einen so langen Zeitraum geschieht, daß wasserlösliches Harzmaterial in dem lignocellulosehaltigen Material zu einer auf der Oberfläche haftenden und das lignocellulosehaltige Material mit der Oberfläche verbindenden wasserfesten Klebverbindung polymerisiert, vernetzt und warmgehärtet wird.

36. Verfahren zur Herstellung eines Verbundprodukts, bei dem man nach einem Verfahren nach Anspruch 1 oder 2 oder nach einem Verfahren nach einem der Ansprüche 13 bis 21 hergestelltes behandeltes lignocellulosehaltiges Material mit anderem Material vermischt und die erhaltene Mischung verpreßt, was bei einer solchen Temperatur und einem solchen Druck und über einen so langen Zeitraum geschieht, daß wasserlösliches Harzmaterial in dem lignocellulosehaltigen Material zu einer auf dem teilchenförmigen Material haftenden und es zusammenbindenden wasserfesten Klebverbindung polymerisiert, vernetzt und warmgehärtet wird.

37. Verfahren nach Anspruch 36, bei dem man als anderes Material lignocellulosehaltiges Material einsetzt.

## Revendications

1. Procédé de traitement d'une matière lignocellulosique comprenant :
a) la mise en contact rapide d'une matière lignocellulosique sous forme divisée avec de la vapeur à haute pression à une température suffisamment élevée pour décomposer et hydrolyser l'hémicellulose contenue dans la matière sans sa carbonisation ;
b) le maintien de la matière lignocellulosique en contact avec la vapeur à haute pression seulement pendant une période suffisante pour décomposer et hydrolyser l'hémicellulose, sans sa carbonisation, en matière résineuse hydrosoluble à faible poids moléculaire choisis parmi les glucides pentose et hexose, des polymères glucidiques, des carbohydrates déshydratés, le furfural, des acides organiques et d'autres produits de décomposition, avec une dégradation négligeable de la cellulose ;
c) la séparation d'au moins une portion de la matière résineuse hydrosoluble de la matière lignocellulosique, la matière résineuse hydrosoluble séparée étant utilisable en tant qu'adhésif résineux imperméable thermodurcissable, la matière lignocellulosique restante étant utilisable en tant qu'adhésif imperméable thermodurcissable et agent gonflant.

2. Procédé selon la revendication 1, dans lequel la vapeur à haute pression est à une température dans la gamme de 120°C à 280°C.

3. Procédé de jonction, comprenant le chauffage et la pression d'une matière résineuse hydrosoluble sous forme concentrée et produite conformément à un procédé selon l'une quelconque des revendications précédentes, contre une surface à laquelle elle doit adhérer à une température et à une pression et pendant une période suffisante pour polymériser, réticuler et thermodurcir la matière résineuse en donnant lieu à une liaison adhésive imperméable adhérant à la surface.

4. Procédé selon la revendication 3, dans lequel ladite température à laquelle la matière résineuse est pressée contre la surface est d'au moins 160°C.

5. Procédé selon la revendication 3 ou 4, dans lequel ladite surface est d'une matière non lignocellulosique.

6. Procédé de production d'un produit composite comprenant les opérations consistant à mélanger la matière résineuse hydrosoluble produite conformément à l'une ou l'autre des revendications 1 et 2 avec une autre matière en vue de produire un mélange, et à presser le mélange à une température et à une pression suffisante pour polymériser, réticuler et thermodurcir la matière résineuse, en produisant ainsi une liaison adhésive hydrosoluble liant ladite autre matière.

7. Procédé selon la revendication 6, dans lequel ladite température à laquelle le mélange est pressé est d'au moins 160°C.

8. Procédé selon la revendication 6, dans lequel ladite température à laquelle le mélange est pressé est dans la gamme de 160°C à 250°C.

9. Procédé selon l'une quelconque des revendications 6 à 8, dans lequel le mélange est formé en un mat.

10. Procédé selon l'une quelconque des revendications 6 à 9, dans lequel ladite autre matière est une matière lignocellulosique.

11. Procédé selon l'une quelconque des revendications 6 à 9, dans lequel ladite autre matière est une matière non lignocellulosique.

12. Procédé selon l'une quelconque des revendications 6 à 11, dans lequel la matière résineuse hydrosoluble est utilisée sous forme liquide ou solide.

13. Procédé de traitement d'une matière lignocellulosique comprenant :
a) la mise en contact rapide d'une matière lignocellulosique sous forme divisée avec de la vapeur à haute pression à une température suffisamment élevée pour décomposer et hydrolyser l'hémicellulose contenue dans ladite matière lignocellulosique sans sa carbonisation ;
b) le maintien de la matière lignocellulosique en contact avec la vapeur à haute pression pendant une période suffisante seulement pour la décomposition et l'hydrolyse de l'hémicellulose en une matière résineuse hydrosoluble à faible poids moléculaire choisie parmi les glucides pentose et hexose, des polymères glucidiques, le furfural, des carbohydrates déshydratés, des acides organiques et d'autres produits de décomposition ;
c) la séparation d'au moins une portion de la matière résineuse hydrosoluble de la matière lignocellulosique, la matière résineuse hydrosoluble séparée étant utilisable en tant qu'adhésif résineux imperméable thermodurcissable ;
d) la mise en contact rapide de la matière lignocellulosique hydrolysée restante de l'étape b) avec de la vapeur à haute pression à une température suffisante pour décomposer et hydrolyser la cellulose sans sa carbonisation ;
e) le maintien de la matière lignocellulosique précédemment hydrolysée en contact avec la vapeur à haute pression pendant une période suffisante pour la décomposition et l'hydrolyse de la cellulose en une matière résineuse hydrosoluble à faible poids moléculaire choisie parmi les glucides hexose et pentose, des polymères glucidiques, l'hydroxyméthylfurfural, le furfural, des carbohydrates déshydratés, des acides organiques et d'autres produits de décomposition ; et
f) la séparation d'au moins une portion de la matière résineuse hydrosoluble de la matière lignocellulosique, la matière résineuse hydrosoluble séparée étant utilisable en tant qu'adhésif résineux imperméable thermodurcissable, la matière lignocellulosique restante étant utilisable en tant qu'adhésif imperméable thermodurcissable et agent gonflant.

14. Procédé selon la revendication 13, comprenant en outre le séchage ou une autre concentration de la matière résineuse hydrosoluble séparée de l'étape(c).

15. Procédé selon la revendication 14, dans lequel la matière résineuse hydrosoluble séparée est séchée.

16. Procédé selon l'une quelconque des revendications 13 à 15, dans lequel la matière lignocellulosique divisée est mélangée avec un catalyseur acide avant les étapes (a) et (d) en vue d'accélérer la décomposition thermique et l'hydrolyse de l'hémicellulose et de la cellulose en la matière résineuse hydrosoluble.

17. Procédé selon l'une quelconque des revendications 13 à 16, dans lequel la matière résineuse hydrosoluble est ajustée à un faible pH afin d'accélérer son thermodurcissement.

18. Procédé selon l'une quelconque des revendications 13 à 17, dans lequel la matière lignocellulosique est dérivée d'une ou de plusieurs espèces de matière ligneuse ou non ligneuse.

19. Procédé selon l'une quelconque des revendications 13 à 18, dans lequel la matière lignocellulosique est sous la forme d'une particule, d'une fibre, d'un copeau ou d'un mélange de ceux-ci.

20. Procédé selon l'une quelconque des revendications 13 à 19, dans lequel la lignine de la matière lignocellulosique est décomposée et hydrolysée par de la vapeur à haute pression en lignine à faible poids moléculaire et en produits de décomposition de la lignine.

21. Procédé selon l'une quelconque des revendications 13 à 20, dans lequel la matière résineuse hydrosoluble dérivée de la décomposition et de l'hydrolyse de l'hémicellulose et de la cellulose contient une faible quantité de lignine à faible poids moléculaire et de produits de décomposition de la lignine.

22. Procédé de jonction, comprenant le chauffage et la pression d'une matière résineuse hydrosoluble sous forme concentrée et produite conformément à un procédé selon l'une quelconque des revendications 13 à 21, contre une surface à laquelle elle doit adhérer à une température et à une pression et pendant une période suffisante pour polymériser, réticuler et thermodurcir la matière résineuse en donnant lieu à une liaison adhésive imperméable adhérant à la surface.

23. Procédé selon la revendication 22, dans lequel ladite surface est d'une matière lignocellulosique.

24. Procédé selon la revendication 22, dans lequel ladite surface est d'une matière non lignocellulosique.

25. Procédé selon l'une quelconque des revendications 22 à 24, dans lequel le mélange comprend également une matière résineuse hydrosoluble de l'étape (c) d'un procédé conformément à l'une quelconque des revendications 1, 2 et 13 à 21.

26. Procédé selon l'une quelconque des revendications 22 à 25, dans lequel la matière résineuse hydrosoluble est utilisée sous forme liquide ou solide.

27. Procédé de production d'un produit composite comprenant les opérations consistant à mélanger la matière résineuse hydrosoluble produite selon l'une quelconque des revendications 1, 2 et 13 à 22 avec une autre matière en vue de produire un mélange, et à presser le mélange à une température et à une pression suffisante pour polymériser, réticuler et thermodurcir la matière résineuse, en produisant ainsi une liaison adhésive hydrosoluble liant ladite autre matière.

28. Procédé selon la revendication 27, dans lequel ladite température à laquelle le mélange est pressé est d'au moins 160°C.

29. Procédé selon la revendication 28, dans lequel ladite température à laquelle le mélange est pressé est dans la gamme de 160°C à 250°C.

30. Procédé selon l'une quelconque des revendications 27 à 29, dans lequel le mélange est formé en un mat.

31. Procédé selon l'une quelconque des revendications 27 à 30, dans lequel la matière particulaire est une matière lignocellulosique.

32. Procédé selon l'une quelconque des revendications 27 à 31, dans lequel la matière particulaire est une matière non lignocellulosique.

33. Procédé selon l'une quelconque des revendications 27 à 32, dans lequel le mélange comprend également une matière résineuse hydrosoluble de l'étape (c) d'un procédé conformément à l'une quelconque des revendications 1 et 2 ou des revendications 13 à 21.

34. Procédé selon l'une quelconque des revendications 27 à 33, dans lequel la matière résineuse hydrosoluble est utilisée sous forme liquide ou solide.

35. Procédé de liaison, comprenant le chauffage et la pression d'une matière lignocellulosique traitée produite par un procédé selon l'une quelconque des revendications 1 et 2 ou produite par un procédé selon l'une quelconque des revendications 13 à 21, contre une surface à laquelle elle doit adhérer, à une température et à une pression pendant une période suffisante pour polymériser, réticuler et thermodurcir la matière résineuse hydrosoluble dans la matière lignocellulosique en donnant lieu à une liaison adhésive imperméable adhérant à la surface et liant la matière lignocellulosique à la surface.

36. Procédé de production d'un produit composite comprenant l'opération consistant à mélanger la matière lignocellulosique traitée produite par un procédé selon l'une quelconque des revendications 1 et 2 ou produite par un procédé selon l'une quelconque des revendications 13 à 21, avec une autre matière en vue de produire un mélange, et la pression du mélange à une température et à une pression et pendant une période suffisante pour polymériser, réticuler et thermodurcir la matière résineuse hydrosoluble dans la matière lignocellulosique en donnant lieu à une liaison adhésive imperméable adhérant à la matière particulaire et liant celle-ci.

37. Procédé selon la revendication 36, dans lequel l'autre matière est une matière lignocellulosique.
